# EUROPÄISCHE PATENTSCHRIFT

(11) **EP 1 615 315 B1**
(45) Veröffentlichungstag und Bekanntmachung des Hinweises auf die Patenterteilung: **23.12.2009**
(21) Anmeldenummer: 04016238.0
(22) Anmeldetag: 09.07.2004
(51) Int. Cl.: H02K 3/50

(54) **Elektrische Maschine**
Electric machine
Machine électrique

(43) Veröffentlichungstag der Anmeldung: 11.01.2006
(73) Patentinhaber: SIEMENS AKTIENGESELLSCHAFT, 80333 München (DE)
(72) Erfinder: Kowalski, Waldemar, 45472 Mülheim (DE); Pohlmann, Friedhelm, Dr., 45355 Essen (DE); Schattauer, Dora, 45473 Mülheim (DE)

(56) Entgegenhaltungen:
- DE-B- 1 056 254
- US-A- 3 075 112
- PATENT ABSTRACTS OF JAPAN Bd. 0050, Nr. 11 (E-042), 23. Januar 1981 (1981-01-23) & JP 55 139045 A (HITACHI LTD), 30. Oktober 1980 (1980-10-30)
- PATENT ABSTRACTS OF JAPAN Bd. 0061, Nr. 19 (E-116), 3. Juli 1982 (1982-07-03) & JP 57 046644 A (TOSHIBA CORP), 17. März 1982 (1982-03-17)

## Beschreibung

Die vorliegende Erfindung betrifft eine elektrische Maschine mit einem drehfest angeordneten Stator und einem drehbar gelagerten Läufer, wobei der Stator und/oder der Läufer eine Wicklung aufweisen, die einen Wicklungskopf aufweist. Darüber hinaus betrifft die Erfindung ein Verfahren zur Verfestigung eines Wicklungskopfes einer erfindungsgemäßen elektrischen Maschine.

Elektrische Maschinen werden zur Umwandlung von mechanischer in elektrische Energie bzw. umgekehrt vorgesehen. Eine verbreitete Ausführungsform der elektrischen Maschine ist die sogenannte rotierende elektrische Maschine, die einen in einem Gehäuse drehbar gelagerten Läufer aufweist oder die als Außenläufer ausgebildet ist, wobei der Läufer um einen zentrisch im Inneren des Läufers angeordneten Stator rotiert. Solche Maschinen sind in unterschiedlichsten Arten bekannt, so beispielsweise als Synchronmaschinen, Asynchronmaschinen, Gleichstrommaschinen und weitere. Jede elektrische Maschine weist eine elektrische Wicklung auf, mittels der durch Stromfluss ein magnetisches Feld erzeugbar ist. Dieses Magnetfeld wirkt mit einem weiteren Magnetfeld eines Permanentmagneten oder einer weiteren Wicklung zusammen, und zwar derart, dass eine Kraft wirkt, die im Motorbetrieb zu der entsprechend gewünschten Bewegung führt. Bei rotierenden elektrischen Maschinen ist dies eine Drehbewegung. Im umgekehrten Fall, im Generatorbetrieb, wird mittels einer Bewegung und der Einwirkung eines Magnetfeldes ein elektrischer Strom erzeugt, der für weitere elektrische Anwendungen bereitgestellt wird.

Unter Wicklung im Sinne der vorliegenden Erfindung wird nicht nur das Vorsehen eines Wickels aus einem elektrisch leitfähigen Material wie beispielsweise Kupfer, Aluminium oder dergleichen verstanden, sondern grundsätzlich eine geeignete elektrisch leitfähige Schicht, mittels der ein Magnetfeld erzeugbar ist, wie beispielsweise in der einfachsten Ausführungsform eines Kurzschlussläufers, einer Drehstrommaschine, die neben einer Statorwicklung für jede der drei Phasen einen Läufer aus einem elektrisch leitfähigen Vollmaterial, wie beispielsweise Eisen oder dergleichen. Solche Drehstrommaschinen sind beispielsweise aus dem Fachbuch "Der neuzeitliche Drehstrommotor", 4. Auflage, Loher & Söhne GmbH, Ruhstorf/Rott 1960, bekannt.

Um ein hinreichend starkes Magnetfeld zu erzeugen, besteht eine Wicklung in der Regel aus einer Vielzahl von isoliert zueinander angeordneten Windungen, wobei die Stärke des Magnetfeldes, die magnetische Flussdichte, sowohl mit zunehmender Windungszahl als auch mit zunehmendem Strom zunimmt. In einem aktiven Bereich der elektrischen Maschine, in dem die Kraftübertragung stattfindet, sind die Wicklungsabschnitte oftmals im wesentlichen parallel zu einer Achse des Läufers geführt. Zur Führung des magnetischen Flusses sind die Leiter von einem Blechpaket aus einem magnetisch permeablem Werkstoff umgeben. An den Enden des aktiven Bereichs sind die einzelnen Leiter bedarfsgerecht miteinander elektrisch leitend verbunden. Dieser Bereich, bzw. der Bereich der Wicklung, der aus dem Blechpaket herausragt, wird als Wicklungskopf bezeichnet (siehe auch Hütte IV A, Elektrotechnik, 28. Auflage, W. Ernst & Sohn, Berlin).

Aufgrund von mechanischen Einwirkungen auf die Einzelleiter der Windungen, und zwar hervorgerufen durch magnetische Kräfte, sowie auch durch mechanische Einwirkungen aufgrund des bestimmungsgemäßen Betriebs wie Vibrationen, Zentripedalkräfte und dergleichen, ist es erforderlich, den Wicklungskopf derart zu versteifen, dass ein dauerhafter, sicherer Betrieb der elektrischen Maschine gewährleistet ist. Im Stand der Technik werden hierzu in der Regel aufwändig angepasste Füllelemente sowie Stopfmaterialien verwendet. Ergänzt werden diese Mittel durch weitere Fixierelemente wie Bandagen, um die mechanische Festigkeit zu erhöhen. Mit diesen Maßnahmen ist jedoch nur eine begrenzte mechanische Festigkeit erreichbar. Zugleich erweist sich die Herstellung der Versteifung des Wicklungskopfes als mechanisch und kostenmäßig aufwändig (siehe auch "Der neuzeitliche Drehstrommotor", Seite 152).

Bereits die WO 00/30238 beschäftigt sich mit Problemen im Wicklungskopfbereich einer elektrischen Maschine. So stellt der Wicklungskopf eines Läufers unter anderem eine Schwachstelle hinsichtlich der Auswuchtung des Läufers dar. Nicht nur aus diesem Grund sollte der Wicklungskopf achsnah und möglichst kurz ausgebildet sein. Der Wicklungskopf trägt nicht zur elektromechanischen Kraftübertragung bei, sondern führt lediglich zu Verlusten. Oftmals wird der Wicklungskopf auch zur Halterung der Wicklung verwendet.

Eine elektrische Maschine gemäß der Einleitung des Anspruchs 1 ist aus US 3 075 112 bekannt.

Der Erfindung liegt daher die Aufgabe zugrunde, einen Wicklungskopf anzugeben, der einerseits eine Verbesserung der mechanischen Festigkeit aufweist und mit dem andererseits eine Reduzierung des Herstellaufwands erreichbar ist.

Die angegebene Aufgabe wird mit der vorliegenden Erfindung durch eine elektrische Maschine gemäß dem Anspruch 1 gelöst.

Mit der Verwendung eines schäumenden Werkstoffes kann die mechanische Festigkeit des Wicklungskopfes erhöht werden, insbesondere weil der schäumende Werkstoff auch in Hohlräumen des Wicklungskopfes zu einer Kraftübertragung zwischen einzelnen Windungen beitragen kann. Ferner ergibt sich eine schnellere und einfachere Montage gegenüber dem bisherigen Stand der Technik, da das Vorsehen aufwändig in Handarbeit herzustellender Bandagen eingespart werden kann. Darüber hinaus kann Aufwand für Instandhaltung durch Verminderung von Setzerscheinungen und Abrieb reduziert werden. Insgesamt kann eine Erhöhung der Lebensdauer der elektrischen Maschine sowie auch eine erhöhte Leistungsfähigkeit erreicht werden. Auch können geringere Setzerscheinungen und ein geringerer Abrieb erreicht werden, was sich positiv auf die Zuverlässigkeit der elektrischen Maschine auswirkt.

Gemäß der vorliegenden Erfindung wird vorgeschlagen, dass der Wicklungskopf eine Gewebematrix aufweist. So ist vorgesehen, dass zwischen einzelnen Windungen im Wicklungskopf eine Gewebematrix angeordnet ist. Die Gewebematrix kann beispielsweise aus Abschnitten mit vorgegebenen Abmessungen gebildet sein, beispielsweise als Quader, Würfel oder dergleichen, welcher zwischen den einzelnen Wicklungen angeordnet ist. In den verbleibenden Zwischenräumen ist dann der schäumende Werkstoff angeordnet. So kann erreicht werden, dass einzelne Windungen des Wicklungskopfes in einer vorgegebenen Position zueinander gehalten werden, bevor der schäumende Werkstoff eingebracht wird. Ferner wird vorgeschlagen, dass die Gewebematrix durch ein Vlies, ein Nadelvlies, ein Keramikfasergewebe, ein Glasfasergewebe und/oder einem Mischgewebe hiervon gebildet ist. Eine kostengünstige Herstellung der Gewebematrix kann erreicht werden.

Es wird weiterhin vorgeschlagen, dass der schäumende Werkstoff elektrisch isolierend ist. So kann der Werkstoff zusätzlich eine Isolationsschicht bilden, wodurch die Belastbarkeit der Wicklung verbessert werden kann. Dies erweist sich insbesondere dann als vorteilhaft, wenn die Wicklung mit Spannungsspitzen beaufschlagt wird, beispielsweise beim Betrieb der Wicklung der elektrischen Maschine an einem statischen Umrichter. Ein solcher Betrieb führt in der Regel zu einer impulsförmigen asymmetrischen Spannungsverteilung über der Wicklung und somit zu einer bereichsweisen hohen Beanspruchung der Isolation, welche daher einer verstärkten Alterung unterliegt.

Darüber hinaus wird vorgeschlagen, dass der schäumende Werkstoff feuchtigkeitsabweisend ist. So kann vorteilhaft vermieden werden, dass durch die Umgebungsatmosphäre Feuchtigkeit in die Wicklung gelangt und so zu einer Beeinträchtigung der Isolation der Wicklung führen kann. Die Zuverlässigkeit der Isolation kann weiter verbessert werden.

Ferner wird vorgeschlagen, dass der schäumende Werkstoff temperaturbeständig ist. Hierdurch kann erreicht werden, dass die elektrische Maschine auch bei hohen Umgebungstemperaturen eingesetzt werden kann. Ferner erweist sich dies als Vorteil bei einer explosionsgeschützten Ausführungsart der elektrischen Maschine, da hier aufgrund der hohen Anforderungen an die Bauart eine Kühlung in der Regel nur über das hermetisch geschlossene Gehäuse möglich ist. Hohe Innentemperaturen können zugelassen werden, wodurch eine deutlich bessere Kühlleistung gegenüber konventionellen Bauarten erreicht werden kann.

Um eine einfache Herstellung erreichen zu können, wird vorgeschlagen, dass der schäumende Werkstoff durch ein Polymer gebildet ist. Nach Einbringen des schäumenden Werkstoffs in die vorgesehenen Positionen des Wicklungskopfes erfolgt eine Verfestigung durch Polymerisation. Dabei kann die Polymerisation beispielsweise sowohl automatisch durch bereits im Werkstoff vorhandene Polymerisationskeime als auch durch andere Mittel als initiierte Polymerisation erfolgen. So kann beispielsweise vorgesehen sein, dass die Polymerisation erst ab Überschreiten einer vorgebbaren Temperaturgrenze erfolgt. Auf diese Weise kann sichergestellt werden, dass der schäumende Werkstoff an den vorgegebenen Stellen des Wicklungskopfes vollständig aufgebracht ist, bevor die Polymerisation einsetzt. Erst nach Überprüfung der Aufbringung des schäumenden Werkstoffs wird die Polymerisation durch thermische Behandlung in einem Ofen oder durch Infrarotstrahlung oder dergleichen initiiert.

Mit der Erfindung wird ferner ein Verfahren zur Versteifung eines Wicklungskopfes einer erfindungsgemäßen elektrischen Maschine gemäß dem Anspruch 8 vorgeschlagen, wobei der Wicklungskopf mittels eines schäumenden Werkstoffs versteift wird. Durch die Verwendung des schäumenden Werkstoffs für die Versteifung kann eine aufwändige Versteifung mittels Bandagen, insbesondere durch Handarbeit, vermieden werden. Zudem kann eine höhere Qualität der Versteifung erreicht werden, da das erfindungsgemäße Verfahren nicht von manuellen Einzelfähigkeiten abhängig ist.

Gemäß der vorliegenden Erfindung wird vorgeschlagen, dass in den Wicklungskopf eine Gewebematrix eingebracht wird. So kann vorteilhaft die erforderliche Menge an schäumendem Werkstoff zur Verfestigung des Wicklungskopfes gering gehalten werden. Darüber hinaus kann erreicht werden, dass einzelne Windungen zueinander in einer vorgebbaren Weise vor der Behandlung mit dem schäumenden Werkstoff festgelegt werden. So kann die Wicklung vorteilhaft im Bereich des Wicklungskopfes hinsichtlich elektrischer Isolation und Zuverlässigkeit in weitgehend optimaler Weise festgelegt werden. Darüber hinaus wird vorgeschlagen, dass die Gewebematrix mit dem schäumenden Werkstoff benetzbar ist. So können vorteilhaft die Gewebematrix und der schäumende Werkstoff einen Verbund eingehen, der zu einer besonders günstigen Verfestigung des Wicklungskopfes führt. Die Zuverlässigkeit der Verfestigung des Wicklungskopfes kann weiter erhöht werden.

Es wird ferner vorgeschlagen, dass der schäumende Werkstoff in Hohlräume des Wicklungskopfes eingespritzt wird. Vorteilhaft tragen die Hohlräume des Wicklungskopfes somit zur Verfestigung des Wicklungskopfes bei. Eine erhöhte Festigkeit und eine erhöhte Belastbarkeit kann erreicht werden.

In einer weiteren Ausgestaltung wird vorgeschlagen, dass der schäumende Werkstoff aushärtet. Eine weitere Verbesserung der Festigkeit des Wicklungskopfes kann erreicht werden. Das Aushärten kann beispielsweise durch Ausgasen eines Lösungsmittels oder dergleichen erfolgen. Vorzugsweise ist der Werkstoff jedoch so gewählt, dass eine Elastizität für den bestimmungsgemäßen Betrieb erhalten bleibt, um Defekte durch Versprödung zu reduzieren.

Vorteilhaft kann aber auch vorgesehen sein, dass der schäumende Werkstoff zur Aushärtung thermisch behandelt wird. So kann nicht nur eine Reduzierung der Aushärtzeit erreicht werden, sondern es kann vorgesehen sein, dass der schäumende Werkstoff erst durch die thermische Behandlung zur Aushärtung veranlasst wird. Dies ermöglicht eine kontrollierbare Aushärtung in vorgegebener Weise.

In einer weiteren Ausgestaltung der vorliegenden Erfindung wird vorgeschlagen, dass der schäumende Werkstoff polymerisiert. So kann beispielsweise vorgesehen sein, dass automatisch nach Aufbringen des schäumenden Werkstoffs dieser in einer vorgegebenen Zeit polymerisiert und damit eine Verfestigung des Wicklungskopfes bewirkt. Die Initiierung der Polymerisation kann jedoch auch durch thermische Einwirkung, Strahlung oder durch aktivierende Substanzen bewirkt werden. So kann beispielsweise vorgesehen sein, dass die Polymerisation durch Einwirkung einer Infrarotstrahlung oder auch einer gasförmigen Aktivierungssubstanz erfolgt.

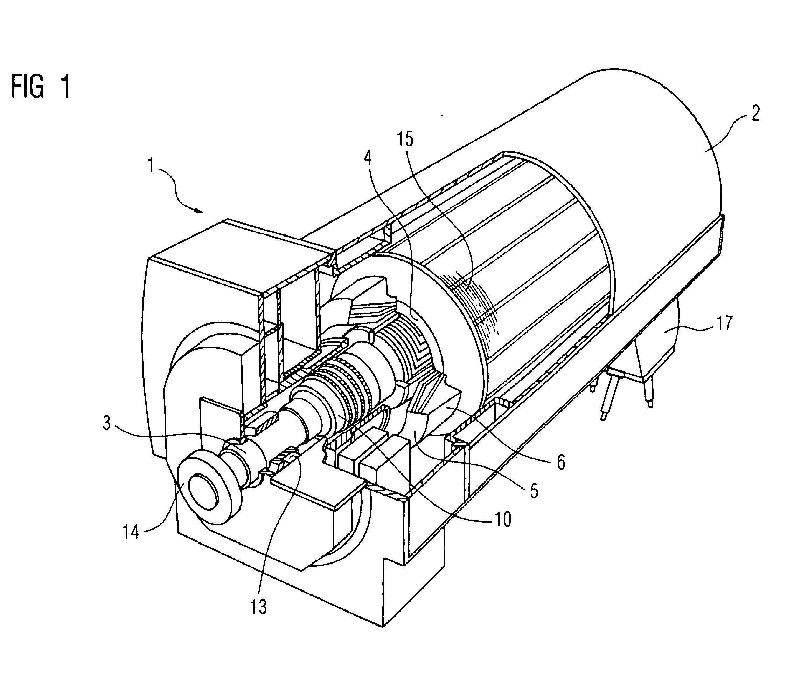

Weitere Vorteile und Merkmale sind der folgenden Beschreibung eines Ausführungsbeispiels zu entnehmen. Im wesentlichen gleichbleibende Bauteile sind mit den gleichen Bezugszeichen bezeichnet. Ferner wird bezüglich gleicher Merkmale und Funktionen auf die Beschreibung zum Ausführungsbeispiel in Fig. 1 verwiesen.

Es zeigen:
- Fig. 1: eine perspektivische Ansicht eines elektrischen Generators mit einem im Bereich des Wicklungskopfs aufgebrochenen Gehäuse,
- Fig. 2: eine vergrößerte Darstellung des Wicklungskopfs gemäß der vorliegenden Erfindung,
- Fig. 3: eine vergrößerte Darstellung des Bereichs III in Fig. 2 und
- Fig. 4: eine vergrößerte Darstellung des Bereichs IV in Fig. 3.

In Fig. 1 ist in schematisch perspektivischer Ansicht ein Ausschnitt aus einem Drehstromgenerator 1 dargestellt, der ein Gehäuse 2 aufweist, in dem ein Läufer 10 mit einer Rotorwelle 3 drehbar gelagert ist. Die Rotorwelle 3 weist an einem Ende einen Flansch 14 auf, über den dem Generator 1 ein Drehmoment zuführbar ist. Die Rotorwelle 3 ist mittels zweier Lagerungen drehbar gelagert, von denen eine 13 in Fig. 1 ersichtlich ist. Die zweite ist am gegenüberliegenden Ende der Rotorwelle 3 vorgesehen und aus Gründen der Übersichtlichkeit nicht dargestellt.

Ferner weist das Gehäuse 6 einen elektrischen Anschlusskasten 17 zur elektrischen Verbindung des Generators 6 mit einem Verbraucher oder einem elektrischen Netz auf.

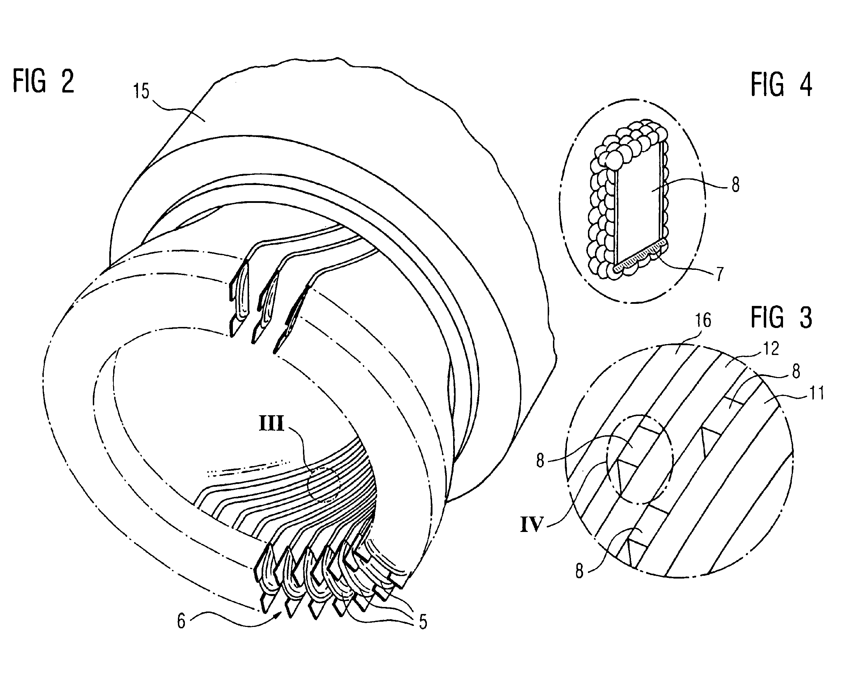

Fig. 2 zeigt eine vergrößerte Darstellung eines der beiden Wicklungsköpfe.

An der Innenseite des Gehäuses 2 ist eine drehfest mit dem Gehäuse 2 verbundene Statorwicklung 5 eines Stators angeordnet. Die Wicklung 5 ist im aktiven Bereich zur Führung des magnetischen Flusses von einem Blechpaket 15 umgeben, vorliegen gebildet aus Eisenblechen, die gegeneinander elektrisch isoliert sind. Der Läufer 10 weist eine im wesentlichen rotationssymmetrisch um die Rotorwelle 3 angeordnete Läuferwicklung 4 auf. Die Wicklungsköpfe 6 verbinden die einzelnen Leiter der Statorwicklung 5 elektrisch leitend miteinander in vorgebbarer Weise.

Fig. 3 zeigt nunmehr einen vergrößerten Ausschnitt des Wicklungskopfes 6 aus Fig. 2, wobei beispielhaft drei stabförmige Leiter 11, 12, 16 der Statorwicklung 5 vergrößert dargestellt sind. Die Stableiter 11, 12, 16 sind beabstandet zueinander angeordnet. Im Zwischenraum zwischen den stabförmigen Leitern 11, 12, 16 sind quaderförmige Gewebematrizen 8 aus einem Nadelvlies eingefügt. Die Zwischenräume zwischen den einzelnen stabförmigen Leitern 11, 12, 16 sind mit dem Polymerschaum 7 aufgefüllt. Der Polymerschaum 7 stellt eine kraftübertragende Verbindung zwischen den einzelnen stabförmigen Leitern 11, 12, 16 her und legt darüber hinaus die eingesetzten Gewebematrizen 8 fest.

Nachdem die Gewebematrixelemente 8 an ihren vorgegebenen Positionen zwischen den stabförmigen Leitern 11, 12 angeordnet sind und somit die Leiter 11, 12, 16 in ihrer vorgegebenen Position festliegen, wird mittels einer nicht näher dargestellten Spritzvorrichtung Polymerschaum in die Hohlräume eingespritzt, wie aus Fig. 4 ersichtlich.

Als Polymerschaum wird eine Zwei-Komponentenformulierung eines niedrig dichten Epoxydschaums verwendet. Die Volumenmasse des Fertigschaums kann durch die Auswahl des Basisharzes bestimmt werden. Ein Basisharz z. B. PB 160, PB 250, PB 400 oder PB 600 der Firma Timeout Composit oHG in 53332 Bornheim-Sechtem, Deutschland, wird mit einem Härter wie z. B. DM 02, DM 03, SD 8203 oder SD 2505 gemischt. Über die Härterkomponente kann die Aushärtungszeit und darüber hinaus auch die mögliche Größe des Werkstücks bestimmt werden. Die Mischungsverhältnisse für das Polymer liegen beispielsweise in einem Bereich von 40% bis 99% Basisharz und 1% bis 60% Härter, wobei auch noch zusätzliche Stoffe vorgesehen sein können. Vorzugsweise liegt der Anteil des Basisharzes zwischen 60% bis 90% und der des Härters zwischen 10% bis 40%. Besonders bevorzugt ist der Bereich von 70% bis 80% für das Basisharz und 20% bis 30% für den Härter. In einem ersten Schritt nach dem Anrühren der Mischung erfolgt eine schnelle Expansion der Mischung, und zwar das Aufschäumen mittels Gasbildung. In einem zweiten, langsameren Schritt erfolgt die Aushärtung der Schaummasse. Der Grad der Expansion des Polymerschaums kann in einem Bereich von 1 bis 10, vorzugsweise 1,5 bis 6,5 liegen. Die vorliegenden Mischungen sind bei sachgerechter Verwendung in der Regel innerhalb einer Stunde ausgehärtet. Um eine Formstabilität sicherzustellen wird jedoch eine Nachhärtung von mindestens sechs Stunden bei 40° Umgebungstemperatur vorgeschlagen. Als Nach-Härte-Zyklus kann auch eine Lagerung von 6 bis 24 Stunden bei Raumtemperatur erfolgen. Vorteilhaft kann der Polymerschaum in einer vorgegebenen Weise ausgewählt werden, um die gewünschte Funktion zu erreichen.

Der Polymerschaum härtet innerhalb einer vorgebbaren Zeit aus, wobei er eine gewisse Elastizität bewahrt, um Rissen durch Versprödung vorzubeugen. Zur Verbesserung der Aushärtung wird der Wicklungskopf 6 mit infraroter Strahlung thermisch beheizt. Der Polymerschaum legt zugleich die Positionen der Gewebematrizen 8 fest. In der vorliegenden Ausgestaltung sind dazu die Gewebematrizen 8 mit dem Polymerschaum 7 benetzbar. Nach Aushärtung des Polymerschaums 7 ist der Wicklungskopf 6 verfestigt. Weitere fixierende Elemente wie beispielsweise Bandagen oder dergleichen sind nicht erforderlich.

Das in den Figuren dargestellte Ausführungsbeispiel dient lediglich der Erläuterung der Erfindung und ist für diese nicht beschränkend. So können insbesondere die verwendeten Werkstoffe, insbesondere für den schäumenden Werkstoff, oder auch die Anwendung auf beliebige elektrische Maschinen variieren, ohne den Schutzbereich der Erfindung zu verlassen.

## Patentansprüche

1. Elektrische Maschine (1) mit einem drehfest angeordneten Stator und einem drehbar gelagerten Läufer (10),
wobei der Stator und/oder der Läufer (10) eine Wicklung (4, 5) aufweisen, deren Wicklungskopf (6) mittels eines schäumenden Werkstoffs (7) versteift ist, wobei
der Wicklungskopf (6) zwei Leiter (11, 12, 16) aufweist, **dadurch gekennzeichnet, dass** zwischen den Leitern eine Gewebematrix (8) angeordnet ist,
wobei zwischen der Gewebematrix (8) und den Leitern (11, 12, 16) Zwischenräume gebildet sind,
wobei der schäumende Werkstoff (7) in den Zwischenräumen angeordnet ist.

2. Elektrische Maschine (1) nach Anspruch 1,
**dadurch gekennzeichnet, dass**
die Gewebematrix (8) als Quader oder Würfel ausgebildet ist.

3. Elektrische Maschine nach Anspruch 1 oder 2,
**dadurch gekennzeichnet, dass**
die Gewebematrix (8) durch ein Vlies, ein Nadelvlies, ein Keramikfasergewebe und/oder einem Mischgewebe hiervon gebildet ist.

4. Elektrische Maschine nach Anspruch 1,2 oder 3,
**dadurch gekennzeichnet, dass**
der schäumende Werkstoff (7) elektrisch isolierend ist.

5. Elektrische Maschine nach einem der Ansprüche 1 bis 4,
**dadurch gekennzeichnet, dass**
der schäumende Werkstoff (7) feuchtigkeitsabweisend ist.

6. Elektrische Maschine nach einem der Ansprüche 1 bis 5,
**dadurch gekennzeichnet, dass**
der schäumende Werkstoff (7) temperaturbeständig ist.

7. Elektrische Maschine nach einem der Ansprüche 1 bis 6,
**dadurch gekennzeichnet, dass**
der schäumende Werkstoff (7) durch ein Polymer gebildet ist.

8. Verfahren zur Versteifung eines Wicklungskopfes (6) einer elektrischen Maschine (1) nach einem der Ansprüche 1 bis 6,
wobei der Wicklungskopf (6) mittels eines schäumenden Werkstoffs (7) ausgeschäumt wird
**dadurch gekennzeichnet, dass**
zwischen zwei Leitern (11,12,16) des Wickelkopfes eine Gewebematrix (8) angeordnet wird und ein schäumender Werkstoff (7) in einen Zwischenraum, der sich zwischen dem Leiter (11,12,16) und der Gewebematrix ausbildet, eingespritzt wird.

9. Verfahren nach Anspruch 8,
**dadurch gekennzeichnet, dass**
der schäumende Werkstoff (7) aushärtet.

10. Verfahren nach Anspruch 8 oder 9,
**dadurch gekennzeichnet, dass**
der schäumende Werkstoff (7) zur Aushärtung thermisch behandelt wird.

11. Verfahren nach einem der Ansprüche 8 bis 10,
**dadurch gekennzeichnet, dass**
der schäumende Werkstoff (7) polymerisiert.

## Claims

1. Electrical machine (1) having a stator which is arranged such that it cannot rotate and having a rotor (10) which is mounted such that it can rotate, wherein the stator and/or the rotor (10) have/has a winding (4, 5), whose end winding (6) is reinforced by means of a foaming material (7), wherein the end winding (6) has two conductors (11, 12, 16), **characterized in that** a fabric matrix (8) is arranged between the conductors, wherein intermediate spaces are formed between the fabric matrix (8) and the conductors (11, 12, 16),
and wherein the foaming material (7) is arranged in the intermediate spaces.

2. Electrical machine (1) according to Claim 1, **characterized in that** the fabric matrix (8) is in the form of a cuboid or cube.

3. Electrical machine according to Claim 1 or 2, **characterized in that** the fabric matrix (8) is formed by a nonwoven, a needle-punched nonwoven, a ceramic fibre fabric and/or a mixed fabric thereof.

4. Electrical machine according to Claim 1, 2 or 3, **characterized in that** the foaming material (7) is electrically insulating.

5. Electrical machine according to one of Claims 1 to 4, **characterized in that** the foaming material (7) is moisture-repellent.

6. Electrical machine according to one of Claims 1 to 5, **characterized in that** the foaming material (7) is temperature-resistant.

7. Electrical machine according to one of Claims 1 to 6, **characterized in that** the foaming material (7) is formed by a polymer.

8. Method for reinforcing an end winding (6) of an electrical machine (1) according to one of Claims 1 to 6,
wherein the end winding (6) is surrounded by foam by means of a foaming material (7)
**characterized in that**
a fabric matrix (8) is arranged between two conductors (11, 12, 16) of the end winding, and a foaming material (7) is injected into an intermediate space which is formed between the conductor (11, 12, 13) and the fabric matrix.

9. Method according to Claim 8, **characterized in that** the foaming material (7) hardens.

10. Method according to Claim 8 or 9, **characterized in that** the foaming material (7) is heat-treated for hardening.

11. Method according to one of Claims 8 to 10, **characterized in that** the foaming material (7) is polymerized.

## Revendications

1. Moteur ( 1 ) électrique ayant un stator fixe en rotation et un rotor ( 10 ) monté tournant, le stator et/ou le rotor ( 10 ) ayant un enroulement ( 4, 5 ) dont la tête ( 6 ) d'enroulement est rigidifiée au moyen d'un matériau ( 7 ) mousse, dans lequel la tête ( 6 ) d'enroulement a deux conducteurs ( 11, 12, 16 ), **caractérisé en ce qu'**une matrice ( 8 ) en nappe est disposé entre les conducteurs, des espaces intermédiaires étant formés entre la matrice ( 8 ) en nappe et les conducteurs ( 11, 12, 16 )
le matériau ( 7 ) mousse étant disposé dans les espaces intermédiaires.

2. Moteur ( 1 ) électrique suivant la revendication 1,
**caractérisé en ce que**
la matrice ( 8 ) en nappe est constituée en parallélépipède ou en cube.

3. Moteur électrique suivant la revendication 1 ou 2,
**caractérisé en ce que**
la matrice ( 8 ) de nappe est formée par un non-tissé, par un non-tissé aiguilleté, par une nappe de fibres de céramique et/ou par une nappe mixte de ceux-ci.

4. Moteur électrique suivant la revendication 1, 2 ou 3,
**caractérisé en ce que**
le matériau ( 7 ) mousse est isolant du point de vue électrique.

5. Moteur électrique suivant l'une des revendications 1 à 4, **caractérisé en ce que**
le matériau ( 7 ) mousse repousse l'humidité.

6. Moteur électrique suivant l'une des revendications 1 à 5,
**caractérisé en ce que**
le matériau ( 7 ) mousse résiste à la température.

7. Moteur électrique suivant l'une des revendications 1 à 6,
**caractérisé en ce que**
le matériau ( 7 ) mousse est formé par un polymère.

8. Procédé de rigidification d'une tête ( 6 ) d'enroulement d'un moteur ( 1 ) électrique suivant l'une des revendications 1 à 6,
dans lequel on constitue la tête ( 6 ) d'enroulement au moyen d'un matériau ( 7 ) mousse,
**caractérisé en ce que**
une matrice ( 8 ) de nappe est disposée entre deux conducteurs ( 11, 12, 16 ) de la tête d'enroulement et un matériau ( 7 ) mousse est injecté dans un espace intermédiaire qui se forme entre le conducteur ( 11, 12, 16 ) et la matrice formant nappe.

9. Procédé suivant la revendication 8,
**caractérisé en ce que** l'on durcit le matériau ( 7 ) mousse.

10. Procédé suivant la revendication 8 ou 9, **caractérisé en ce que** l'on traite thermiquement le matériau ( 7 ) mousse pour le durcissement.

11. Procédé suivant l'une des revendications 8 à 10,
**caractérisé en ce que** l'on polymérise le matériau ( 8 ) mousse.
